# EUROPEAN PATENT APPLICATION

(11) **EP 3 720 173 A1**
(43) Date of publication of application: **07.10.2020**
(21) Application number: 19738620.4
(22) Date of filing: 10.01.2019
(51) Int. Cl.: H04W 24/10, H04W 36/00, H04W 36/24, H04W 36/36

(54) **SWITCHING METHOD, TERMINAL DEVICE AND NETWORK DEVICE**

(30) Priority: 11.01.2018 CN 201810026708
(71) Applicant: Huawei Technologies Co., Ltd., Longgang Shenzhen, Guangdong 518129 (CN)
(72) Inventor: ZHAO, Baoqiang, Shenzhen, Guangdong 518129 (CN); CHANG, Junren, Shenzhen, Guangdong 518129 (CN); ZHANG, Xiangdong, Shenzhen, Guangdong 518129 (CN)
(74) Representative: Pfenning, Meinig & Partner mbB
(86) International application number: PCT/CN2019/071068
(87) International publication number: WO 2019/137409

(57) **Abstract**

This application provides a handover method, a terminal device, and a network device. The handover method includes: determining, by a terminal device, a first measurement report triggering threshold based on threshold configuration information, where the threshold configuration information includes first information or threshold update information, and the first information includes at least one cell quality change rate threshold and at least two measurement report triggering thresholds; sending, by the terminal device, a first measurement report to a first network device based on the first measurement report triggering threshold; and receiving, by the terminal device, a first handover command from the first network device, where the first handover command is used to instruct to hand over the terminal device from the first network device to a second network device. According to the handover method in the embodiments of this application, the terminal device may select or update, based on the threshold configuration information, a measurement report triggering threshold, to help prevent the terminal device from continuously triggering the measurement report, thereby reducing system overheads of the terminal device.

## Description

This application claims priority to Chinese Patent Application No. 201810026708.2, filed with the Chinese Patent Office on January 11, 2018 and entitled "HANDOVER METHOD, TERMINAL DEVICE, AND NETWORK DEVICE", which is incorporated herein by reference in its entirety.

### TECHNICAL FIELD

This application relates to the communications field, and more specifically, to a handover method, a terminal device, and a network device.

### BACKGROUND

A handover is a process of switching a wireless connection link of communication from one cell to another cell in a mobile communication process while ensuring uninterrupted communication. During a call, when a user moves from a coverage area of a base station to a coverage area of another base station, or when communication quality deteriorates due to external interference or another reason, a terminal device sends a measurement report to a current cell, to hand over the terminal device to the another base station to ensure normal communication.

In an existing condition-based handover method, for a terminal device that loiters at a low speed or is stationary at a cell edge, after a measurement report is triggered, a serving base station sends a handover request message to a target base station, the target base station replies with a handover request response message and reserves a resource for the terminal device, and the serving base station sends a condition-based handover command to the terminal device. Because the terminal device moves slowly or is stationary and a handover condition is not met for a long time, the terminal device discards the condition-based handover command after a timer expires. At this time, cell quality meets a measurement report triggering threshold. Therefore, the terminal device sends a measurement report to the serving base station, and a condition-based handover preparation process is repeatedly performed. Each time the foregoing steps are repeated, two air interface messages and two Xn messages are initiated, and a target cell always reserves a resource for the terminal device, seriously wasting system resources.

### SUMMARY

This application provides a handover method, a terminal device, and a network device. The terminal device may select or update a measurement report triggering threshold based on threshold configuration information, to help prevent the terminal device from continuously triggering a measurement report, thereby reducing system overheads of the terminal device.

According to a first aspect, a handover method is provided. The handover method includes: determining, by a terminal device, a first measurement report triggering threshold based on threshold configuration information, where the threshold configuration information includes first information or threshold update information, and the first information includes at least one cell quality change rate threshold and at least two measurement report triggering thresholds; sending, by the terminal device, a first measurement report to a first network device based on the first measurement report triggering threshold; and receiving, by the terminal device, a first handover command from the first network device, where the first handover command is used to instruct the terminal device to be handed over from the first network device to a second network device.

Specifically, the threshold update information is a fourth measurement report triggering threshold or a threshold change step.

In some possible implementations, the at least one cell quality change rate threshold in the first information is predefined by a protocol.

According to the handover method in this embodiment of this application, the terminal device may select or update the measurement report triggering threshold based on the threshold configuration information, to help prevent the terminal device from continuously triggering a measurement report, thereby reducing system overheads of the terminal device.

With reference to the first aspect, in some possible implementations of the first aspect, the threshold configuration information includes the first information, and the method further includes: receiving, by the terminal device, a measurement control message from the first network device, where the measurement control message includes the first information; and the determining, by a terminal device, a first measurement report triggering threshold based on threshold configuration information includes: determining, by the terminal device, the first measurement report triggering threshold based on a cell quality change rate and the first information.

According to the handover method in this embodiment of this application, the first information is carried in the measurement control message, to help prevent the terminal device from continuously triggering the measurement report, thereby reducing the system overheads of the terminal device.

With reference to the first aspect, in some possible implementations of the first aspect, the threshold configuration information includes the first information, and the method further includes: receiving, by the terminal device, a second handover command from the first network device, where the second handover command includes a second handover condition and the first information; and the determining, by a terminal device, a first measurement report triggering threshold based on threshold configuration information includes: if the terminal device does not meet the second handover condition within a predetermined time, determining, by the terminal device, the first measurement report triggering threshold based on a cell quality change rate and the first information.

In some possible implementations, before the receiving, by the terminal device, a second handover command from the first network device, the method further includes: receiving, by the terminal device, a measurement control message from the first network device, where the measurement control message includes second threshold configuration information; and sending, by the terminal device, a second measurement report to a first network node based on the second threshold configuration information; and the receiving, by the terminal device, a second handover command from the first network device includes: receiving, by the terminal device, the second handover command sent by the first network device based on the second measurement report.

According to the handover method in this embodiment of this application, the first information is carried in the handover command, to help prevent the terminal device from continuously triggering the measurement report, thereby reducing the system overheads of the terminal device.

With reference to the first aspect, in some possible implementations of the first aspect, the determining, by the terminal device, the first measurement report triggering threshold based on a cell quality change rate and the first information includes: determining, by the terminal device, a first cell quality change rate threshold based on the cell quality change rate and the at least one cell quality change rate threshold; and determining, by the terminal device, the first measurement report triggering threshold from the at least two measurement report triggering thresholds based on the first cell quality change rate threshold based on the first cell quality change rate threshold.

According to the handover method in this embodiment of this application, the terminal device selects an appropriate measurement report triggering threshold from the at least two measurement report triggering thresholds based on the cell quality change rate and the first information, to help prevent the terminal device from continuously triggering the measurement report, thereby reducing the system overheads of the terminal device.

With reference to the first aspect, in some possible implementations of the first aspect, the threshold configuration information includes the threshold update information, and the method further includes: receiving, by the terminal device, a third handover command from the first network device, where the third handover command includes a third handover condition and the threshold update information; and the determining, by a terminal device, a first measurement report triggering threshold based on threshold configuration information includes: if the terminal device does not meet the third handover condition within a predetermined time, determining, by the terminal device, the first measurement report triggering threshold based on the threshold update information.

In some possible implementations, before the receiving, by the terminal device, a third handover command from the first network device, the method further includes: receiving, by the terminal device, a measurement control message sent by the first network device, where the measurement control message includes a third measurement report triggering threshold; and sending, by the terminal device, a third measurement report to the first network device based on the third measurement report triggering threshold; and the receiving, by the terminal device, a third handover command from the first network device includes: receiving, by the terminal device, the third handover command sent by the first network device based on the third measurement report.

According to the handover method in this embodiment of this application, the threshold update information is carried in the handover command, to help prevent the terminal device from continuously triggering the measurement report, thereby reducing the system overheads of the terminal device.

With reference to the first aspect, in some possible implementations of the first aspect, the threshold configuration information includes the threshold update information, and the method further includes: receiving, by the terminal device, a measurement control message from the first network device, where the measurement control message includes a third measurement report triggering threshold and the threshold update information; sending, by the terminal device, a third measurement report to the first network device based on the third measurement report triggering threshold; and receiving, by the terminal device, a third handover command from the first network device, where the third handover command includes a third handover condition; and the determining, by a terminal device, a first measurement report triggering threshold based on threshold configuration information includes: if the terminal device does not meet the third handover condition within a predetermined time, determining, by the terminal device, the first measurement report triggering threshold based on the threshold update information.

According to the handover method in this embodiment of this application, the threshold update information is carried in the measurement control message, to help prevent the terminal device from continuously triggering the measurement report, thereby reducing the system overheads of the terminal device.

With reference to the first aspect, in some possible implementations of the first aspect, the threshold update information is a fourth measurement report triggering threshold, and the determining, by the terminal device, the first measurement report triggering threshold based on the threshold update information includes: if the terminal device does not meet the third handover condition within the predetermined time, after a predetermined time, determining, by the terminal device, the fourth measurement report triggering threshold as the first measurement report triggering threshold.

With reference to the first aspect, in some possible implementations of the first aspect, the threshold update information is a threshold change step.

With reference to the first aspect, in some possible implementations of the first aspect, the cell quality change rate threshold includes at least one of a quality change rate threshold of a neighboring cell, a quality change rate threshold of a serving cell, and a change rate threshold of a quality deviation between the neighboring cell and the serving cell.

With reference to the first aspect, in some possible implementations of the first aspect, the measurement report triggering threshold includes at least one of a quality threshold of the neighboring cell, a quality threshold of the serving cell, and a threshold of a quality deviation between the neighboring cell and the serving cell.

According to a second aspect, a handover method is provided. The handover method includes: receiving, by a terminal device, a first measurement control message from a first network device, where the first measurement control message includes a first measurement report triggering threshold; sending, by the terminal device, a first measurement report to the first network device based on the first measurement report triggering threshold; receiving, by the terminal device, a first handover command from the first network device, where the first handover command includes a first handover condition; and if the terminal device does not meet the first handover condition within a first predetermined time, sending, by the terminal device, a second measurement report to the first network device based on the first measurement report triggering threshold after a second predetermined time.

Specifically, the first predetermined time is a timer 1, and the second predetermined time is a timer 2. After receiving the first handover command from the first network device, the terminal device starts the timer 1, and the terminal device does not meet the first handover condition during running of the timer 1. After the timer 1 expires, the timer 2 is started. During running of the timer 2, the terminal device does not trigger a measurement report. After the timer 2 expires, the terminal device sends the second measurement report to the first network device based on the first measurement report triggering threshold.

In some possible implementations, the first handover command includes the timer 1 and the timer 2.

According to the handover method in this embodiment of this application, the timer 2 is added, to help prevent the terminal device from continuously triggering a measurement report, thereby reducing system overheads of the terminal device.

According to a third aspect, a handover method is provided. The handover method includes: sending, by a first network device, threshold configuration information to a terminal device, where the threshold configuration information is used by the terminal device to determine a first measurement report triggering threshold, the threshold configuration information includes first information or threshold update information, and the first information includes at least one cell quality change rate threshold and at least two measurement report triggering thresholds; receiving, by the first network device, a first measurement report from the terminal device; and sending, by the first network device, a first handover command to the terminal device based on the first measurement report, where the first handover command is used to instruct the terminal device to be handed over from the first network device to a second network device.

With reference to the third aspect, in some possible implementations of the third aspect, the sending, by a first network device, threshold configuration information to a terminal device includes: sending, by the first network device, a measurement control message to the terminal device, where the measurement control message includes the threshold configuration information.

With reference to the third aspect, in some possible implementations of the third aspect, the method further includes: sending, by the first network device, a measurement control message to the terminal device, where the measurement control message includes a second cell quality threshold; and receiving, by the first network device, a second measurement report from the terminal device; and the sending, by a first network device, threshold configuration information to a terminal device includes: sending, by the first network device, a second handover command to the terminal device based on the second measurement report, where the second handover command includes the threshold configuration information.

With reference to the third aspect, in some possible implementations of the third aspect, the sending, by the first network device, a second handover command to the terminal device based on the second measurement report includes: sending, by the first network device, a handover request message to the second network device based on the second measurement report; receiving, by the first network device, a handover request response message from the second network device, where the handover request response message includes the threshold configuration information; and sending, by the first network device, the second handover command to the terminal device based on the handover request response message.

With reference to the third aspect, in some possible implementations of the third aspect, the sending, by the first network device, a second handover command to the terminal device based on the second measurement report includes: sending, by the first network device, a handover request message to the second network device based on the second measurement report; receiving, by the first network device, a handover request response message from the second network device; and sending, by the first network device, the second handover command to the terminal device based on the handover request response message.

With reference to the third aspect, in some possible implementations of the third aspect, the sending, by the first network device, a second handover command to the terminal device based on the second measurement report includes: sending, by the first network device, a handover request message to the second network device based on the second measurement report, where the handover request message includes the threshold configuration information; receiving, by the first network device, a handover request response message from the second network device, where the handover request response message includes the threshold configuration information; and sending, by the first network device, the second handover command to the terminal device based on the handover request response message.

According to a fourth aspect, a terminal device is provided and is configured to perform the method according to any one of the first aspect or the possible implementations of the first aspect. Specifically, the terminal device includes the modules configured to perform the method in any one of the first aspect or the possible implementations of the first aspect.

According to a fifth aspect, a terminal device is provided and is configured to perform the method according to any one of the second aspect or the possible implementations of the second aspect. Specifically, the terminal device includes the modules configured to perform the method in any one of the second aspect or the possible implementations of the second aspect.

According to a sixth aspect, a network device is provided and is configured to perform the method according to any one of the third aspect or the possible implementations of the third aspect. Specifically, the network device includes the modules configured to perform the method in any one of the third aspect or the possible implementation of the third aspect.

According to a seventh aspect, a network device is provided. The network device includes a memory, a transceiver, and at least one processor. The memory, the transceiver, and the at least one processor are connected to each other by using a line. The transceiver is configured to perform the information sending and receiving operations that are performed by the network device in the method in any one of the first aspect or the possible implementations of the first aspect. The at least one processor invokes an instruction stored in the memory, to perform the processing operation performed by the network device in the method in any one of the first aspect or the possible implementations of the first aspect.

According to an eighth aspect, a terminal device is provided. The terminal device includes a memory, a transceiver, and at least one processor. The memory, the transceiver, and the at least one processor are connected to each other by using a line. The transceiver is configured to perform the information sending and receiving operations that are performed by the terminal device in the method in any one of the second aspect or the possible implementations of the second aspect. The at least one processor invokes an instruction stored in the memory, to perform the processing operation performed by the terminal device in the method in any one of the second aspect or the possible implementations of the second aspect.

According to a ninth aspect, a network device is provided. The network device includes a memory, a transceiver, and at least one processor. The memory, the transceiver, and the at least one processor are connected to each other by using a line. The transceiver is configured to perform the information sending and receiving operations that are performed by the network device in the method in any one of the third aspect or the possible implementations of the third aspect. The at least one processor invokes an instruction stored in the memory, to perform the processing operation performed by the network device in the method in any one of the third aspect or the possible implementations of the third aspect.

According to a tenth aspect, a chip system is provided. The chip system is applied to a terminal device, and the chip system includes at least one processor, at least one memory, and an interface circuit. The interface circuit is responsible for information exchange between the chip system and an external device. The at least one memory, the interface circuit, and the at least one processor are connected to each other by using a line. The at least one memory stores an instruction. The instruction is executed by the at least one processor, to perform the operations of the terminal device in the methods in the foregoing aspects.

According to an eleventh aspect, a chip system is provided. The chip system is applied to a network device, and the chip system includes at least one processor, at least one memory, and an interface circuit. The interface circuit is responsible for information exchange between the chip system and an external device. The at least one memory, the interface circuit, and the at least one processor are connected to each other by using a line. The at least one memory stores an instruction. The instruction is executed by the at least one processor, to perform the operations of the terminal device in the methods in the foregoing aspects.

According to a twelfth aspect, a communications system is provided, including a network device and/or a terminal device. The terminal device is the terminal device in the foregoing aspects, and the network device is the network device in the foregoing aspects.

According to a thirteenth aspect, a computer program product is provided. The computer program product is applied to a terminal device, and the computer program product includes a series of instructions. When the instructions are executed, the operations of the terminal device in the methods in the foregoing aspects are performed.

According to a fourteenth aspect, a computer program product is provided. The computer program product is applied to a network device, and includes a series of instructions. When the instructions are executed, the operations of the network device in the methods in the foregoing aspects are performed.

According to a fifteenth aspect, a computer-readable storage medium is provided. The computer-readable storage medium stores an instruction, and when the instruction is run on a computer, the computer is enabled to perform the methods in the foregoing aspects.

### BRIEF DESCRIPTION OF DRAWINGS

FIG. 1 is a schematic diagram of a scenario to which a technical solution according to an embodiment of this application is applied;
FIG. 2 is a schematic flowchart of a handover method according to an embodiment of this application;
FIG. 3 is another schematic flowchart of a handover method according to an embodiment of this application;
FIG. 4 is still another schematic flowchart of a handover method according to an embodiment of this application;
FIG. 5 is a schematic diagram of determining a measurement report triggering threshold according to an embodiment of this application;
FIG. 6 is a schematic diagram of determining a measurement report triggering threshold;
FIG. 7 is still another schematic flowchart of a handover method according to an embodiment of this application;
FIG. 8 is still another schematic flowchart of a handover method according to an embodiment of this application;
FIG. 9 is still another schematic flowchart of a handover method according to an embodiment of this application;
FIG. 10 is still another schematic flowchart of a handover method according to an embodiment of this application;
FIG. 11 is still another schematic flowchart of a handover method according to an embodiment of this application;
FIG. 12 is still another schematic flowchart of a handover method according to an embodiment of this application;
FIG. 13 is a schematic block diagram of a terminal device according to an embodiment of this application;
FIG. 14 is another schematic block diagram of a terminal device according to an embodiment of this application; and
FIG. 15 is a schematic block diagram of a network device according to an embodiment of this application.
FIG. 16 is another schematic block diagram of a network device according to an embodiment of this application;
FIG. 17 is still another schematic block diagram of a terminal device according to an embodiment of this application;
FIG. 18 is still another schematic block diagram of a terminal device according to an embodiment of this application;
FIG. 19 is still another schematic block diagram of a network device according to an embodiment of this application; and
FIG. 20 is still another schematic block diagram of a network device according to an embodiment of this application.

### DESCRIPTION OF EMBODIMENTS

The following describes technical solutions of this application with reference to accompanying drawings.

The technical solutions of the embodiments of this application may be applied to various communications systems, such as: a global system for mobile communications (Global System of Mobile Communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communications system, a future 5th generation (5th Generation, 5G) system, and a new radio (New Radio, NR) system.

The terminal device in the embodiments of this application may also be referred to as user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (Public Land Mobile Network, PLMN). This is not limited in the embodiments of this application.

A network device in the embodiments of this application may be a device configured to communicate with a terminal device. The network device may be a base transceiver station (Base Transceiver Station, BTS) in a global system for mobile communications (Global System of Mobile communication, GSM) system or code division multiple access (Code Division Multiple Access, CDMA), or may be a NodeB (NodeB, NB) in a wideband code division multiple access (Wideband Code Division Multiple Access, WCDMA) system, or may be an evolved NodeB (Evolutional NodeB, eNB or eNodeB) in an LTE system, or may be a radio controller in a cloud radio access network (Cloud Radio Access Network, CRAN) scenario. Alternatively, the network device may be a relay station, an access point, an in-vehicle device, a wearable device, a network device in a future 5G network, a network device in a future evolved PLMN network, or the like. This is not limited in the embodiments of this application.

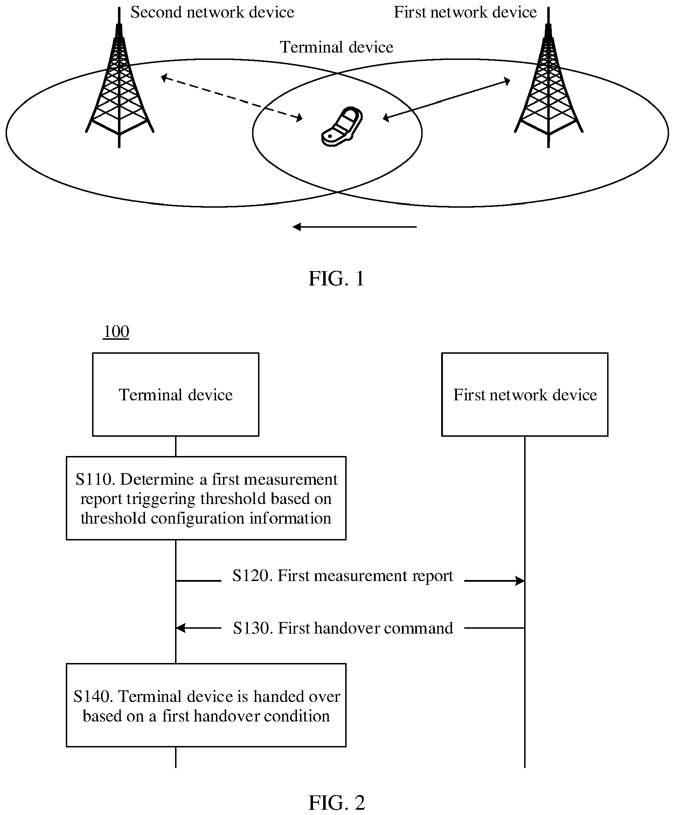

FIG. 1 is a schematic diagram of a scenario to which a technical solution according to an embodiment of this application is applied. As shown in FIG. 1, a terminal device is connected to a first network device. Because the terminal device moves to a second network device, the terminal device needs to be handed over from the first network device to the second network device.

It should be understood that the first network device may be a serving base station or a source base station in an actual case, and the second network device may be a target base station.

FIG. 2 is a schematic flowchart of a handover method 100 according to an embodiment of this application. As shown in FIG. 2, a terminal device may be the terminal device in FIG. 1, a first network device may be the first network device in FIG. 1, and a second network device may be the second network device in FIG. 1. The method 100 includes the following steps.

S 110. The terminal device determines a first measurement report triggering threshold based on threshold configuration information, where the threshold configuration information includes first information or threshold update information, and the first information includes at least one cell quality change rate threshold and at least two measurement report triggering thresholds.

Specifically, the terminal device may receive the threshold configuration information sent by the first network device. The threshold configuration information is used by the terminal device to determine the first measurement report triggering threshold. The terminal device determines the first measurement report triggering threshold based on the threshold configuration information. The threshold configuration information may be the first information or the threshold update information, and the first information includes the at least one cell quality change rate threshold and the at least two measurement report triggering thresholds.

It should be understood that the threshold update information may be a measurement report triggering threshold, or may be a threshold change step.

It should be further understood that the threshold configuration information may be configured in a measurement report message sent by the first network device to the terminal device. Alternatively, the threshold configuration information may be configured in a handover command sent by the first network device to the terminal device before the handover method 100 is performed. In this case, in the handover method 100, the threshold configuration information configured by the first network device by using a handover command in a previous handover may be used, to determine the first measurement report triggering threshold in the handover method 100.

Optionally, the first network device may select one of the following events as a measurement report triggering event:
(1) Quality of a serving cell becomes lower than a threshold (event A2).
(2) Quality of a neighboring cell becomes higher than a threshold (event A4).
(3) An amount by which quality of a neighboring cell is higher than that of a serving cell is higher than a threshold (event A3 or A6).
(4) Quality of a serving cell is lower than a threshold a, and quality of a neighboring cell is higher than a threshold b (event A5).

The first network device sets a group of thresholds for a used triggering event in a measurement configuration. If the triggering event relates to quality of only one cell (for example, the event A2 and the event A4), or the triggering event relates to a quality deviation between two cells (for example, the event A3 and the event A6), the group of thresholds includes only one threshold. If the triggering event relates to quality of two cells (for example, the event A5), the group of thresholds includes two thresholds. When a measurement result of the terminal device meets a configured event threshold, the measurement report is triggered.

S120. The terminal device sends a first measurement report to the first network device based on the first measurement report triggering threshold, and the first network device receives the first measurement report sent by the terminal device.

Specifically, the terminal device measures the serving cell and/or the neighboring cell based on the measurement configuration, and determines whether a condition for triggering the measurement report is met. When it is learned through measurement that a report triggering condition is met (the quality of the neighboring cell is higher than a specific threshold and the quality of the serving cell is lower than a specific threshold, or an amount by which the quality of the neighboring cell is higher than that of the serving cell is higher than a specific threshold), the terminal device sends the first measurement report to the first network device.

S130. The first network device sends a first handover command to the terminal device based on the first measurement report, and the terminal device receives the first handover command sent by the first network device based on the first measurement report, where the first handover command includes a first handover condition.

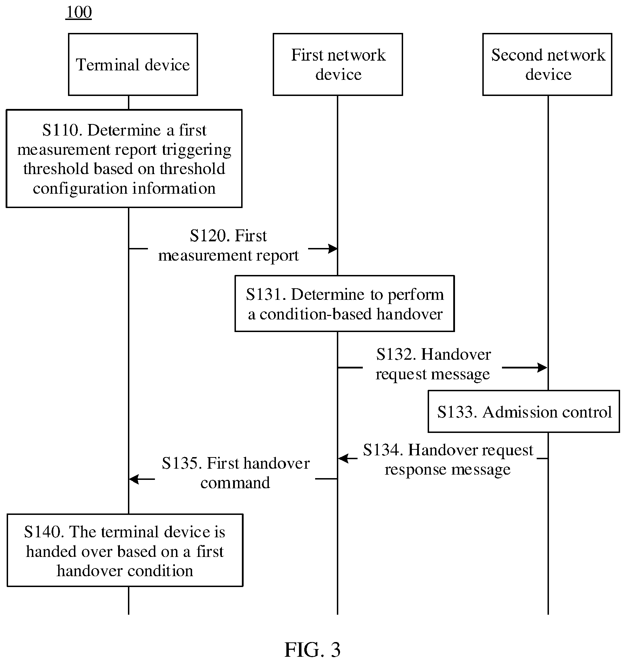

FIG. 3 is another schematic flowchart of a handover method 100 according to an embodiment of this application. As shown in FIG. 3, S130 in which the terminal device receives the first handover command sent by the first network device based on the first measurement report includes the following steps.

S131. The first network device determines, based on the first measurement report, whether to hand over the terminal device.

Specifically, the first network device may make a handover decision based on the first measurement report and radio resource management information.

S132. The first network device sends a handover request message to the second network device, and the second network device receives the handover request message sent by the first network device.

Specifically, the first network device sends the handover request message to the second network device, and the handover request message carries necessary information for the second network device to prepare for a handover.

Optionally, the necessary information includes: a target cell ID, a KgNB*, and radio resource control (Radio Resource Control, RRC) context information (including a cell radio network temporary identifier (Cell Radio Network Temporary Identifier, C-RNTI) that is allocated by the first network device to the terminal device, access-layer configuration information (excluding physical-layer configuration information), and the like).

S133. The second network device performs admission control based on the handover request message.

It should be understood that the first network device may send the handover request message to a plurality of second network devices, and the plurality of second network devices perform admission control.

S134. The second network device sends a handover request response message to the first network device, and the first network device receives the handover request response message sent by the second network device.

Specifically, the second network device sends a handover request acknowledgment message to the first network device, where the handover request response message includes a transparent container (transparent container), and the transparent container is sent to the terminal device as a part of the handover command. The transparent container includes a new C-RNTI. The second network device is configured to select a security algorithm identifier of a security algorithm. The transparent container may further include a dedicated random access preamble sequence (Preamble) and an end time indication of a dedicated preamble, and may further include some other parameters, for example, a system information block.

S135. The first network device sends the first handover command to the terminal device based on the handover request response message, and the terminal device receives the first handover command sent by the first network device, where the first handover command includes the first handover condition.

Specifically, the first network device sends the first handover command to the terminal device, where the first handover command includes a transparent container. The first network device performs a necessary encryption and integrity protection operation on the handover command. The terminal device receives the handover command having necessary information (the necessary information includes: a new C-RNTI and a security algorithm identifier of the second network device, and optionally may further include: a dedicated random access preamble, an end time indication of a dedicated preamble, a system information block of the second network device, and the like). The first network device sends the handover command to the terminal device.

It should be understood that the first handover command may further include a timer 1, and the timer 1 is used to indicate a validity time of the first handover command. After receiving the first handover command, the terminal device does not immediately perform a handover process, and instead starts the timer 1 and evaluates whether the handover condition is met.

S140. The terminal device is handed over based on the first handover condition, where the handover is a handover from the first network device to the second network device.

Specifically, the terminal device determines whether the terminal device meets the first handover condition, and if the terminal device meets the first handover condition, the first terminal device performs a handover, where the handover is a handover from the first network device to the second network device.

In a condition-based handover method in the prior art, the first network device adds a fixed cell quality threshold to a measurement control message. For a terminal device that loiters at a low speed or is stationary at a cell edge, the handover condition is not met for a long time. The terminal device discards a condition-based handover command after a timer expires. At this time, cell quality meets the measurement report triggering threshold. Therefore, the terminal device sends a measurement report to a serving base station, and a condition-based handover preparation process is repeatedly performed, causing a large quantity of signaling overheads. In addition, the second network device reserves a resource for the terminal device, causing serious system resource waste.

According to the handover method in this embodiment of this application, the terminal device may select or update the measurement report triggering threshold based on the threshold configuration information, to help prevent the terminal device from continuously triggering a measurement report, thereby reducing system overheads of the terminal device.

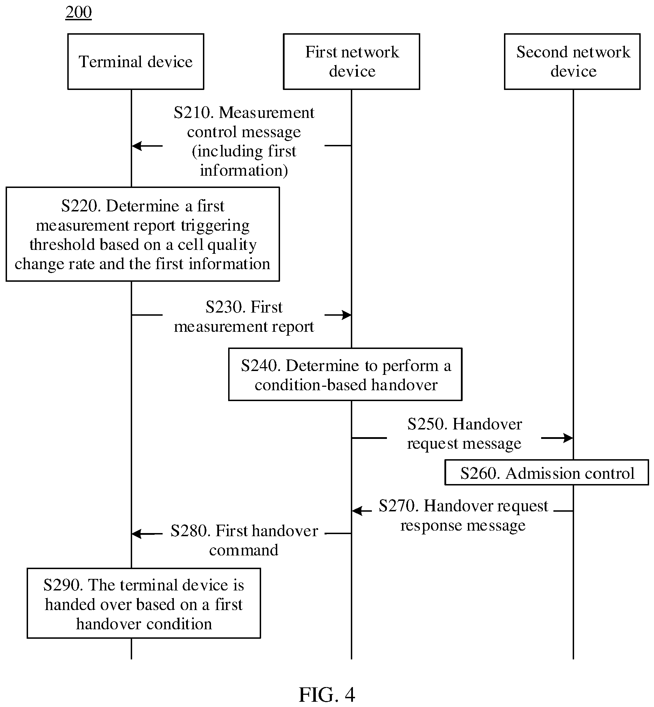

FIG. 4 is a schematic flowchart of a handover method 200 according to an embodiment of this application. As shown in FIG. 4, a terminal device may be the terminal device in FIG. 1, a first network device may be the first network device in FIG. 1, and a second network device may be the second network device in FIG. 1. The method 200 includes the following steps.

S210. The first network device sends a measurement control message to the terminal device, and the terminal device receives the measurement control message sent by the first network device, where the measurement control message includes first information.

S220. The terminal device determines a first measurement report triggering threshold based on a cell quality change rate and the first information.

Specifically, the first network device may configure a measurement process, including a measurement object (at least one of quality of a neighboring cell, quality of a serving cell, or an amount by which quality of a neighboring cell is higher than that of a serving cell) and the first information, of the terminal device based on roaming and access restriction information. The first information includes at least one cell quality change rate threshold and at least two measurement report triggering thresholds. The terminal device determines the first measurement report triggering threshold based on the cell quality change rate and the first information.

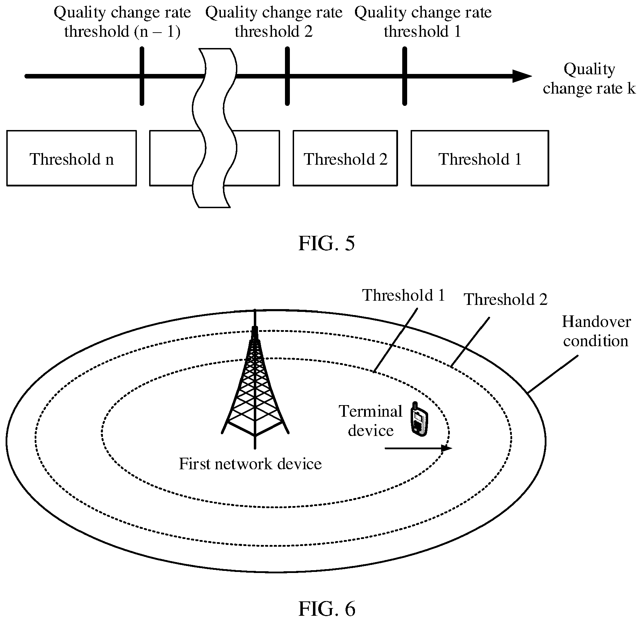

FIG. 5 is a schematic diagram of determining a measurement report triggering threshold according to an embodiment of this application.

For different triggering events in a measurement configuration, a method for selecting the first measurement report triggering threshold is as follows:
(1) Quality of a serving cell becomes lower than a threshold (event A2).
   The first network device configures n measurement report triggering thresholds in the first information: a measurement report triggering threshold 1, a measurement report triggering threshold 2, ..., and a measurement report triggering threshold n.
   In addition, the first network device configures n-1 associated cell quality change rate thresholds in the first information: a cell quality change rate threshold 1, a cell quality change rate threshold 2, ..., and a cell quality change rate threshold (n - 1).
   The determining, by the terminal device, a first measurement report triggering threshold based on a cell quality change rate and the first information includes:
   determining, by the terminal device, a first cell quality change rate threshold based on the cell quality change rate and the at least one cell quality change rate threshold; and
   determining, by the terminal device, the first measurement report triggering threshold from the at least two measurement report triggering thresholds based on the first cell quality change rate threshold based on the first cell quality change rate threshold.

   Specifically, as shown in FIG. 5, a corresponding measurement report triggering threshold is selected based on the cell quality change rate k:
   if k ≥ the cell quality change rate threshold 1, the measurement report triggering threshold 1 is used.
   if the cell quality change rate threshold 2 ≤ k < the cell quality change rate threshold 1, the measurement report triggering threshold 2 is used; and
   if k < the cell quality change rate threshold (n - 1), the measurement report triggering threshold n is used.
(2) Quality of a neighboring cell becomes higher than a threshold (event A4).
(3) An amount by which quality of a neighboring cell is higher than that of a serving cell is higher than a threshold (event A3 or A6).
   It should be understood that, for the A3 event, the A4 event, and the A6 event, a method for determining the first measurement report triggering threshold is the same as the foregoing method for the A2 event. For brevity, details are not described herein again.
   It should be further understood that the first information may further indicate a cell whose quality change rate is used by the terminal device to determine the first measurement report triggering threshold. The cell quality change rate may be at least one of a quality change rate of a neighboring cell, a quality change rate of a serving cell, and a change rate of an amount by which quality of the neighboring cell is higher than that of the serving cell.
   Optionally, the first measurement report triggering threshold includes a threshold a and a threshold b.
(4) Quality of a serving cell is lower than a threshold a, and quality of a neighboring cell is higher than a threshold b (event A5).

The first network device configures n measurement report triggering thresholds in the first information: a measurement report triggering threshold 1 (a₁, b₁), a measurement report triggering threshold 2 (a₂, b₂), ..., and a measurement report triggering threshold n (an, bn).

In addition, the first network device configures n-1 associated cell quality change rate thresholds in the first information: a cell quality change rate threshold 1 (c₁, d₁), a cell quality change rate threshold 2 (c2, d2), ..., and a cell quality change rate threshold (n - 1) (c₍ₙ₋₁₎, d₍ₙ₋₁₎).

It should be understood that, in the foregoing measurement report triggering thresholds, c₁, c₂, ..., and c_{(n - 1)} may represent quality change rate thresholds of a serving cell, and di, d2, ..., and d_{(n - 1)} may represent quality change rate thresholds of a neighboring cell. A quality change rate of a first serving cell may be determined from c₁, c₂, ..., and c_{(n - 1)} based on the quality change rate of the serving cell by using the method in (1). Then, the threshold a is determined from a₁, a2, ..., and an based on the quality change rate of the first serving cell. A quality change rate of a first neighboring cell is determined from di, d₂, ..., and d_{(n - 1)} based on the quality change rate of the neighboring cell. Then, the threshold b is determined from bi, b₂, ..., and bₙ based on the quality change rate of the first serving cell.

It should be further understood that, for the A5 event, the terminal device triggers reporting of the measurement report only when both the quality of the serving cell is worse than the threshold a and the quality of the neighboring cell is better than the threshold b.

S230. The terminal device sends a first measurement report to the first network device based on the first measurement report triggering threshold, and the first network device receives the first measurement report sent by the terminal device.

S240. The first network device determines, based on the first measurement report, whether to hand over the terminal device.

S250. The first network device sends a handover request message to the second network device, and the second network device receives the handover request message sent by the first network device.

S260. The second network device performs admission control based on the handover request message.

S270. The second network device sends a handover request response message to the first network device, and the first network device receives the handover request response message sent by the second network device.

S280. The first network device sends a first handover command to the terminal device based on the handover request response message, and the terminal device receives the first handover command sent by the first network device, where the first handover command includes a first handover condition.

S290. The terminal device is handed over based on the first handover condition, where the handover is a handover from the first network device to the second network device.

It should be understood that S230 to S290 are similar to S120 to S140 in the handover method 100. For brevity, details are not described herein again.

It should be further understood that the first handover command may further include a timer 1. After receiving the first handover command, the terminal device does not immediately perform a handover process, and instead starts the timer 1. If the terminal device meets the first handover condition before the timer 1 expires, the terminal device is handed over to a target cell that meets a condition. If the handover condition is not met during running of the timer 1, after the timer 1 expires, the terminal device discards the first handover command, and performs steps S220 to S280 by using the first information.

The following describes the handover method 200 in this embodiment of this application with reference to FIG. 6. FIG. 6 is a schematic diagram of determining a measurement report triggering threshold. An event type is that quality of a serving cell becomes worse than a measurement report triggering threshold. The first network device configures two measurement report triggering thresholds for the terminal device.

For example, as shown in FIG. 6, if the terminal device moves in a direction away from the first network device, because a cell quality change rate is relatively high and is higher than the cell quality change rate threshold 1 when a speed is relatively fast, a measurement report is triggered when cell quality reaches the threshold 1.

For another example, when the terminal device has a slow speed or is stationary, because the cell quality change rate threshold is less than the cell quality change rate threshold 1, the measurement report is not triggered when the cell quality reaches the threshold 1, and the measurement report can be triggered only when the cell quality reaches the threshold 2. In this way, system resource waste is avoided.

According to the handover method in this embodiment of this application, the measurement control message carries the at least one cell quality change rate and the at least two measurement report triggering thresholds, to help the terminal device select an appropriate measurement report triggering threshold based on an actual situation, thereby helping prevent the terminal device from continuously triggering the measurement report and reduce system overheads of the terminal device.

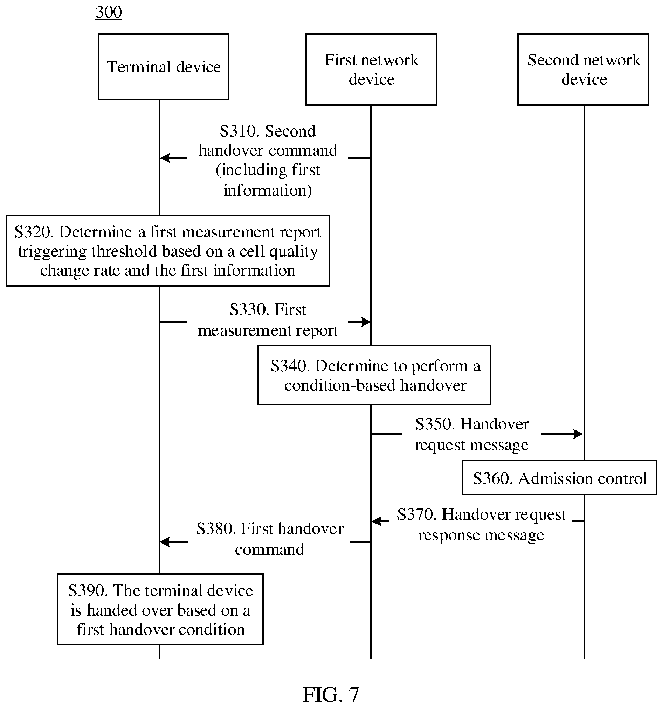

With reference to FIG. 4, the foregoing describes in detail the handover method 200 according to this embodiment of this application. In the handover method 100, the measurement control message carries the first information, to help the terminal device select an appropriate measurement report triggering threshold based on an actual situation. With reference to FIG. 7, the following describes a handover method 300 according to an embodiment of this application. In the handover method 300, the first information is carried in a handover command sent by the first network device to the terminal device in a previous handover, to help the terminal device select an appropriate measurement report triggering threshold during a next handover based on an actual situation.

FIG. 7 is a schematic flowchart of a handover method 300 according to an embodiment of this application. As shown in FIG. 7, a terminal device may be the terminal device in FIG. 1, a first network device may be the first network device in FIG. 1, and a second network device may be the second network device in FIG. 1. The method 300 includes the following steps.

S310. The first network device sends a second handover command to the terminal device based on a second measurement report, and the terminal device receives the second handover command sent by the first network device based on the second measurement report, where the second handover command includes a second handover condition and threshold configuration information.

Optionally, the threshold configuration information is first information.

Optionally, the sending, by the first network device, a second handover command to the terminal device based on a second measurement report includes:
sending, by the first network device, a handover request message to the second network device based on the second measurement report, and receiving, by the second network device, the handover request message sent by the first network device based on the second measurement report;
sending, by the second network device, a handover request response message to the first network device, and receiving, by the first network device, the handover request response message sent by the second network device, where the handover request response message includes the threshold configuration information; and
sending, by the first network device, the second handover command to the terminal device based on the handover request response message, and receiving, by the terminal device, the second handover command sent by the first network device based on the handover request response message.

Specifically, the first information is configured by the second network device. After receiving the handover request message sent by the first network device, the second network device sends the handover request response message to the first network device. The handover request response message includes the first information configured by the second network device. After receiving the handover request response message, the first network device sends the second handover command to the terminal device, where the second handover command carries the first information.

Optionally, the sending, by the first network device, a second handover command to the terminal device based on a second measurement report includes:
sending, by the first network device, a handover request message to the second network device based on the second measurement report, and receiving, by the second network device, the handover request message sent by the first network device based on the second measurement report;
sending, by the second network device, a handover request response message to the first network device, and receiving, by the first network device, the handover request response message sent by the second network device; and
sending, by the first network device, the second handover command to the terminal device based on the handover request response message, and receiving, by the terminal device, the second handover command sent by the first network device based on the handover request response message.

Specifically, the first information is configured by the first network device. After receiving the handover request message sent by the first network device, the second network device sends the handover request response message to the first network device. After receiving the handover request response message, the first network device sends the second handover command to the terminal device, where the second handover command carries the first information.

Optionally, the sending, by the first network device, a second handover command to the terminal device based on a second measurement report includes:
sending, by the first network device, a handover request message to the second network device based on the second measurement report, and receiving, by the second network device, the handover request message sent by the first network device based on the second measurement report, where the handover request message includes the first information;
sending, by the second network device, a handover request response message to the first network device, and receiving, by the first network device, the handover request response message sent by the second network device, where the handover request response message includes the first information; and
sending, by the first network device, the second handover command to the terminal device based on the handover request response message, and receiving, by the terminal device, the second handover command sent by the first network device based on the handover request response message.

Specifically, the first information is configured by the first network device, and the first network device adds the first information to the handover request message sent to the second network device. After receiving the handover request message, the second network device adds the first information to the handover request response message and sends the handover request response message to the first network device. After receiving the handover request response message, the first network device sends the second handover command to the terminal device, where the second handover command carries the first information.

Optionally, before the sending, by the first network device, a second handover command to the terminal device based on a second measurement report, the handover method 300 further includes:
sending, by the first network device, a measurement control message to the terminal device, and receiving, by the terminal device, the measurement control message sent by the first network device, where the measurement control message includes a second measurement report triggering threshold.
sending, by the terminal device, the second measurement report to the first network device based on the second measurement report triggering threshold, and receiving, by the first network device, the second measurement report sent by the terminal device based on the second measurement report triggering threshold.

It should be understood that the second handover command may further include a timer 1. After receiving the second handover command, the terminal device does not immediately perform a handover process, and instead starts the timer 1. If the terminal device meets the second handover condition before the timer 1 expires, the terminal device is handed over to a target cell that meets a condition. If the handover condition is not met during running of the timer 1, after the timer 1 expires, the terminal device discards the second handover command, and performs steps S320 to S380 by using the first information.

S320. If the terminal device does not meet the second handover condition within a predetermined time, the terminal device determines a first measurement report triggering threshold based on a cell quality change rate and the first information.

Specifically, the first network device sends the measurement control message to the terminal device, where the measurement control message includes the second measurement report triggering threshold. After meeting the second measurement report triggering threshold, the terminal device sends the second measurement report to the first network device. The first network device sends the second handover command to the terminal device based on the second measurement report, where the second handover command includes the second handover condition and the first information. If the terminal device does not meet the second handover condition within the predetermined time, the terminal device determines the first measurement report triggering threshold based on the cell quality change rate and the first information.

It should be understood that a process in which the terminal device determines the first measurement report triggering threshold based on the cell quality change rate and the first information is similar to that in S220 in the handover method 200. For brevity, details are not described herein again.

S330. The terminal device sends a first measurement report to the first network device based on the first measurement report triggering threshold, and the first network device receives the first measurement report sent by the terminal device.

S340. The first network device determines, based on the first measurement report, whether to hand over the terminal device.

S350. The first network device sends a handover request message to the second network device, and the second network device receives the handover request message sent by the first network device.

S360. The second network device performs admission control based on the handover request message.

S370. The second network device sends a handover request response message to the first network device, and the first network device receives the handover request response message sent by the second network device.

S380. The first network device sends a first handover command to the terminal device based on the handover request response message, and the terminal device receives the first handover command sent by the first network device, where the first handover command includes a first handover condition.

S390. The terminal device is handed over based on the first handover condition, where the handover is a handover from the first network device to the second network device.

It should be understood that S330 to S390 are similar to S120 to S140 in the handover method 100. For brevity, details are not described herein again.

In this embodiment of this application, a handover command of a previous handover carries the at least one cell quality change rate and the at least two measurement report triggering thresholds, to help the terminal device select an appropriate measurement report triggering threshold based on an actual situation, thereby helping prevent the terminal device from continuously triggering the measurement report and reduce system overheads of the terminal device.

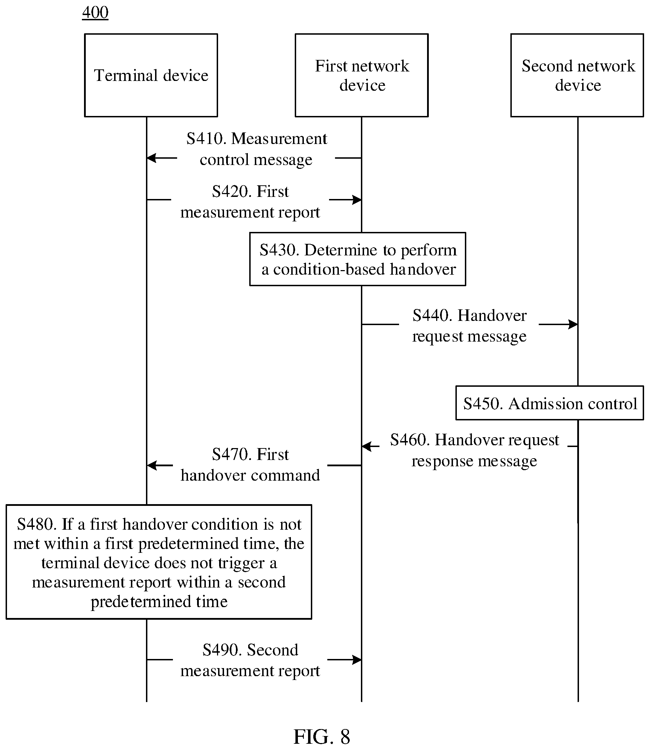

With reference to FIG. 4 to FIG. 7, the foregoing describes in detail the handover methods 200 and 300 according to the embodiments of this application. A network side configures a plurality of measurement report triggering thresholds and corresponding cell quality change rate thresholds for the terminal device, and the terminal device selects a measurement report triggering threshold thereof based on a cell signal quality change rate. With reference to FIG. 8 to FIG. 10, the following describes the methods 400 and 500 according to the embodiments of this application. A timer is used to prevent a terminal device from continuously triggering a measurement report, thereby reducing system overheads of a terminal device that loiters at a low speed or is stationary at a cell edge.

FIG. 8 is a schematic flowchart of a handover method 400 according to an embodiment of this application. As shown in FIG. 8, a terminal device may be the terminal device in FIG. 1, a first network device may be the first network device in FIG. 1, and a second network device may be the second network device in FIG. 1. The method 400 includes the following steps.

S410. The first network device sends a measurement control message to the terminal device, and the terminal device receives the measurement control message sent by the first network device, where the measurement control message includes a first measurement report triggering threshold.

Specifically, the measurement control message sent by the first network device to the terminal device includes the first measurement report triggering threshold.

S420. The terminal device sends a first measurement report to the first network device based on the first measurement report triggering threshold, and the first network device receives the first measurement report sent by the terminal device based on the first measurement report triggering threshold.

S430. The first network device determines, based on the first measurement report, whether to hand over the terminal device.

S440. The first network device sends a handover request message to the second network device, and the second network device receives the handover request message sent by the first network device.

S450. The second network device performs admission control based on the handover request message.

S460. The second network device sends a handover request response message to the first network device, and the first network device receives the handover request response message sent by the second network device.

S470. The first network device sends a first handover command to the terminal device based on the handover request response message, and the terminal device receives the first handover command sent by the first network device, where the first handover command includes a first handover condition.

It should be understood that S430 to S470 are similar to S131 to S135 in the handover method 100. For brevity, details are not described herein again.

It should be further understood that, compared with the first handover command in S135, the first handover command in S470 includes the first handover condition and configurations of a timer 1 and a timer 2. The timer 1 is used to indicate a validity time of the first handover command, and the timer 2 is started after the timer 1 is started and is used to restrict the terminal device in triggering a measurement report.

It should be further understood that the timer 2 may be further configured for the terminal device by using the measurement control message in S410. If the measurement control message includes the timer 2, the first handover command may not include the timer 2.

S480. If the terminal device does not meet the first handover condition within a first predetermined time, the terminal device does not trigger the measurement report within a second predetermined time.

S490. After the second predetermined time, the terminal device sends a second measurement report to the first network device based on the first measurement report triggering threshold.

Specifically, after receiving the first handover command, the terminal device does not immediately perform a handover process, and instead starts the timer 1. The timer 1 is used to indicate the validity time of the first handover command, and the timer 2 is started after the timer 1 is started. During running of the timer 2, the terminal device no longer sends the measurement report to the first network device, and after the timer 2 expires, steps S420 to S470 are performed.

According to the handover method in this embodiment of this application, the timer is used to help prevent the terminal device from continuously triggering the measurement report, and reduce system overheads of the terminal device that loiters at a low speed or is stationary at a cell edge.

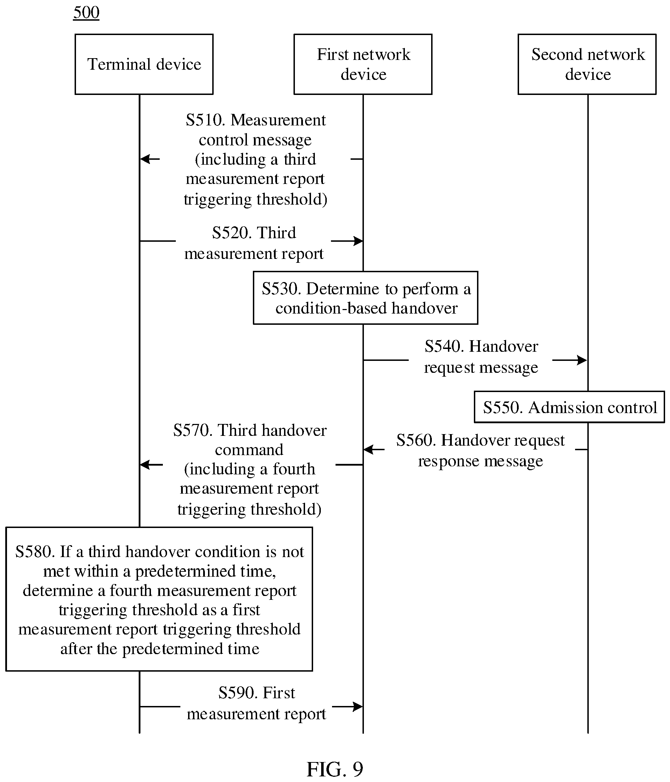

FIG. 9 is a schematic flowchart of a handover method 500 according to an embodiment of this application. A group of specific thresholds are configured, to reduce system overheads of a terminal device that loiters at a low speed or is stationary at a cell edge.

As shown in FIG. 9, a terminal device may be the terminal device in FIG. 1, a first network device may be the first network device in FIG. 1, and a second network device may be the second network device in FIG. 1. The method 500 includes the following steps.

S510. The first network device sends a measurement control message to the terminal device, and the terminal device receives the measurement control message sent by the first network device, where the measurement control message includes a third measurement report triggering threshold.

Specifically, the measurement control message sent by the first network device to the terminal device includes the third measurement report triggering threshold.

S520. The terminal device sends a third measurement report to the first network device based on the third measurement report triggering threshold, and the first network device receives the third measurement report sent by the terminal device based on the third measurement report triggering threshold.

S530. The first network device determines, based on the third measurement report, whether to hand over the terminal device.

S540. The first network device sends a handover request message to the second network device, and the second network device receives the handover request message sent by the first network device.

S550. The second network device performs admission control based on the handover request message.

It should be understood that S510 to S550 are similar to S410 to S450 in the handover method 400. For brevity, details are not described herein again.

S560. The second network device sends a handover request response message to the first network device, and the first network device receives the handover request response message sent by the second network device.

S570. The first network device sends a third handover command to the terminal device based on the handover request response message, and the terminal device receives the third handover command sent by the first network device, where the third handover command includes a third handover condition and threshold update information.

Optionally, the threshold update information is a fourth measurement report triggering threshold.

It should be understood that the threshold update information (the fourth measurement report triggering threshold) may be configured by the first network device, or may be configured by the second network device. A configuration process is similar to that of the first information in S310. For brevity, details are not described herein again.

It should be further understood that, compared with the third handover command in S470, the third handover command in S570 further includes the fourth measurement report triggering threshold in addition to the third handover condition and the configurations of the timer 1 and the timer 2. The timer 1 is used to indicate a validity time of the third handover command, and the timer 2 is started after the timer 1 is started. During running of the timer 2, if the terminal device meets the fourth measurement report triggering threshold configured in S570, the terminal device may send a measurement report to the first network device; or if the terminal device does not meet the fourth measurement report triggering threshold configured in S570, the terminal device does not send the measurement report to the first network device.

Optionally, for different measurement triggering times, the fourth measurement report triggering threshold may include one threshold or two thresholds:
(1) Quality of a serving cell becomes lower than a threshold (event A2), and there is one threshold.
(2) Quality of a neighboring cell becomes higher than a threshold (event A4), and there is one threshold.
(3) An amount by which quality of a neighboring cell is higher than that of a serving cell is higher than a threshold (event A3 or A6), and there is one threshold.
(4) Quality of a serving cell is lower than a threshold a, and quality of a neighboring cell is higher than a threshold b (event A5), and there are two thresholds.

S580. If the terminal device does not meet the third handover condition within a predetermined time, the terminal device determines the fourth measurement report triggering threshold as a first measurement report triggering threshold after the predetermined time.

S590. The terminal device sends a first measurement report to the first network device based on the first measurement report triggering threshold, and the first network device receives the first measurement report sent by the terminal device.

It should be understood that a process after S590 is similar to S130 and S140 in the handover method 100. For brevity, details are not described herein again.

According to the handover method in this embodiment of this application, a group of specific thresholds are carried in the handover command, to help prevent the terminal device from continuously triggering the measurement report, and reduce system overheads of the terminal device that loiters at a low speed or is stationary at a cell edge.

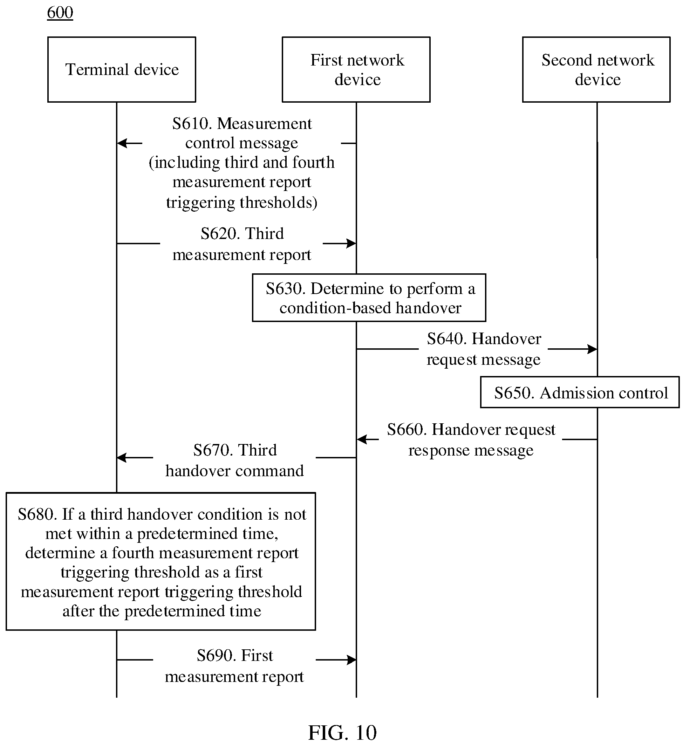

FIG. 10 is a schematic flowchart of a handover method 600 according to an embodiment of this application. As shown in FIG. 10, a terminal device may be the terminal device in FIG. 1, a first network device may be the first network device in FIG. 1, and a second network device may be the second network device in FIG. 1. The method 600 includes the following steps.

S610. The first network device sends a measurement control message to the terminal device, and the terminal device receives the measurement control message sent by the first network device, where the measurement control message includes a third measurement report triggering threshold and threshold update information.

Optionally, the threshold update information is a fourth measurement report triggering threshold.

It should be understood that the fourth measurement report triggering threshold is similar to that in S570. For brevity, details are not described herein again.

Specifically, the measurement control message sent by the first network device to the terminal device includes the third measurement report triggering threshold and the fourth measurement report triggering threshold.

S620. The terminal device sends a third measurement report to the first network device based on the third measurement report triggering threshold, and the first network device receives the third measurement report sent by the terminal device based on the third measurement report triggering threshold.

S630. The first network device determines, based on the third measurement report, whether to hand over the terminal device.

S640. The first network device sends a handover request message to the second network device, and the second network device receives the handover request message sent by the first network device.

S650. The second network device performs admission control based on the handover request message.

It should be understood that S610 to S650 are similar to S510 to S550 in the handover method 500. For brevity, details are not described herein again.

S660. The second network device sends a handover request response message to the first network device, and the first network device receives the handover request response message sent by the second network device.

S670. The first network device sends a third handover command to the terminal device based on the handover request response message, and the terminal device receives the third handover command sent by the first network device, where the third handover command includes a third handover condition.

It should be further understood that, the third handover command in S670 includes the third handover condition and configurations of a timer 1 and a timer 2. The timer 1 is used to indicate a validity time of the third handover command, and the timer 2 is started after the timer 1 is started. During running of the timer 2, if the terminal device meets the fourth measurement report triggering threshold configured in the measurement control message in S610, the terminal device may send a measurement report to the first network device; or if the terminal device does not meet the fourth measurement report triggering threshold configured in the measurement control message in S610, the terminal device does not send the measurement report to the first network device.

S680. If the terminal device does not meet the third handover condition within a predetermined time, the terminal device determines the fourth measurement report triggering threshold as a first measurement report triggering threshold after the predetermined time.

S690. The terminal device sends a first measurement report to the first network device based on the first measurement report triggering threshold, and the first network device receives the first measurement report sent by the terminal device.

It should be understood that a process after S690 is similar to S130 and S140 in the handover method 100. For brevity, details are not described herein again.

According to the handover method in this embodiment of this application, a group of specific thresholds are carried in the measurement control message, to help prevent the terminal device from continuously triggering the measurement report, and reduce system overheads of the terminal device that loiters at a low speed or is stationary at a cell edge.

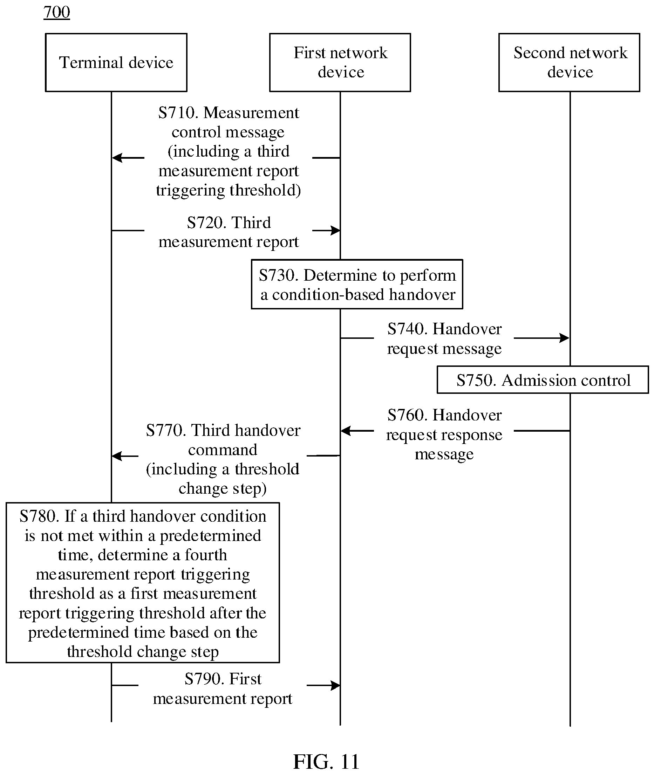

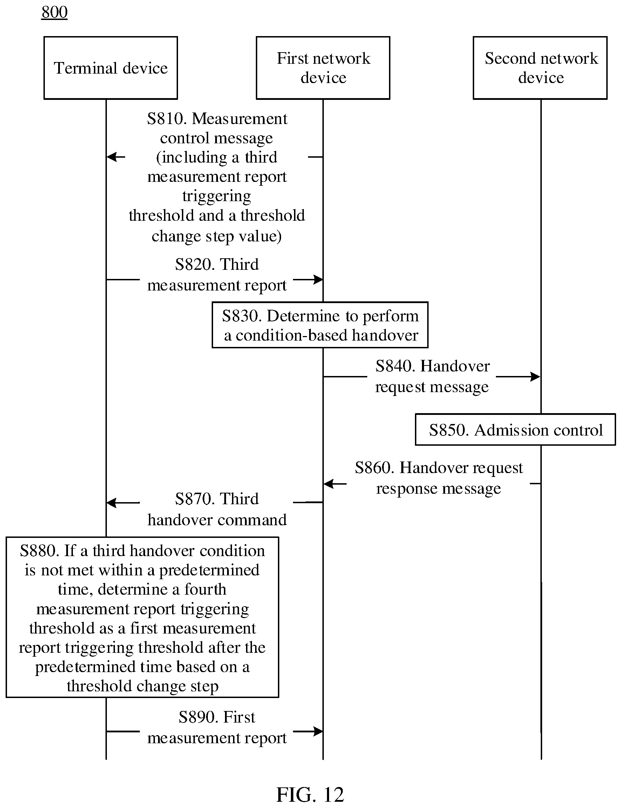

With reference to FIG. 8 to FIG. 10, the foregoing describes in detail the handover methods 400, 500, and 600 according to the embodiments of this application. A timer (or a timer and a group of specific thresholds) is used, to reduce system overheads of a terminal device that loiters at a low speed or is stationary at a cell edge. With reference to FIG. 11 and FIG. 12, the following describes in detail methods 700 and 800 according to the embodiments of this application. A network device configures a threshold change step for a terminal device, to reduce system overheads of a terminal device that loiters at a low speed or is stationary at a cell edge.

FIG. 11 is a schematic flowchart of a handover method 700 according to an embodiment of this application. As shown in FIG. 11, a terminal device may be the terminal device in FIG. 1, a first network device may be the first network device in FIG. 1, and a second network device may be the second network device in FIG. 1. The method 700 includes the following steps.

S710. The first network device sends a measurement control message to the terminal device, and the terminal device receives the measurement control message sent by the first network device, where the measurement control message includes a third measurement report triggering threshold.

Specifically, the measurement control message sent by the first network device to the terminal device includes the third measurement report triggering threshold.

S720. The terminal device sends a third measurement report to the first network device based on the third measurement report triggering threshold, and the first network device receives the third measurement report sent by the terminal device based on the third measurement report triggering threshold.

S730. The first network device determines, based on the third measurement report, whether to hand over the terminal device.

S740. The first network device sends a handover request message to the second network device, and the second network device receives the handover request message sent by the first network device.

S750. The second network device performs admission control based on the handover request message.

It should be understood that S710 to S750 are similar to S510 to S550 in the handover method 500. For brevity, details are not described herein again.

S760. The second network device sends a handover request response message to the first network device, and the first network device receives the handover request response message sent by the second network device.

S770. The first network device sends a third handover command to the terminal device based on the handover request response message, and the terminal device receives the third handover command sent by the first network device, where the third handover command includes a third handover condition and threshold configuration information.

Optionally, the threshold configuration information is a threshold change step.

It should be understood that the threshold update information (the threshold change step) may be configured by the first network device, or may be configured by the second network device. A configuration process is similar to that of the first information in S310. For brevity, details are not described herein again.

It should be understood that, in addition to the third handover condition and a configuration of a timer 1, the third handover command further includes the threshold change step. The timer 1 is used to indicate a validity time of the first handover command. If the terminal device meets the third handover condition before the timer 1 expires, the terminal device is handed over to a target cell that meets a condition. If the terminal device does not meet the third handover condition during running of the timer 1, after the timer 1 expires, the terminal device updates the measurement report triggering threshold based on the threshold change step configured in the third handover command in S760.

S780. If the terminal device does not meet the third handover condition within a predetermined time, the terminal device determines a fourth measurement report triggering threshold as a first measurement report triggering threshold after the predetermined time.

For example, the threshold change step is a step value m. If the terminal device does not meet the third handover condition during running of the timer 1, after the timer 1 expires, the terminal device may determine that the first measurement report triggering threshold is the third measurement report triggering threshold plus the step value m.

As shown in FIG. 6, the third measurement report triggering threshold may be the threshold 1. If the terminal device does not meet the third handover condition during running of the timer 1, after the timer 1 expires, the terminal device may determine that the first measurement report triggering threshold is the threshold 2. The threshold 2 is the third measurement report triggering threshold plus the step value m.

S790. The terminal device sends a first measurement report to the first network device based on the first measurement report triggering threshold, and the first network device receives the first measurement report sent by the terminal device.

It should be understood that the process after S790 is similar to S130 and S140 in the handover method 100. For brevity, details are not described herein again.

FIG. 12 is a schematic flowchart of a handover method 800 according to an embodiment of this application. As shown in FIG. 12, a terminal device may be the terminal device in FIG. 1, a first network device may be the first network device in FIG. 1, and a second network device may be the second network device in FIG. 1. The method 800 includes the following steps.

S810. The first network device sends a measurement control message to the terminal device, and the terminal device receives the measurement control message sent by the first network device, where the measurement control message includes a third measurement report triggering threshold and threshold update information.

Optionally, the threshold update information is a threshold change step.

Specifically, the measurement control message sent by the first network device to the terminal device includes the third measurement report triggering threshold and the threshold change step.

S820. The terminal device sends a third measurement report to the first network device based on the third measurement report triggering threshold, and the first network device receives the third measurement report sent by the terminal device based on the third measurement report triggering threshold.

S830. The first network device determines, based on the third measurement report, whether to hand over the terminal device.

S840. The first network device sends a handover request message to the second network device, and the second network device receives the handover request message sent by the first network device.

S850. The second network device performs admission control based on the handover request message.

It should be understood that S820 to S850 are similar to S720 to S750 in the handover method 700. For brevity, details are not described herein again.

S860. The second network device sends a handover request response message to the first network device, and the first network device receives the handover request response message sent by the second network device.

S870. The first network device sends a third handover command to the terminal device based on the handover request response message, and the terminal device receives the third handover command sent by the first network device, where the third handover command includes a third handover condition.

It should be understood that, the third handover command includes the third handover condition and a configuration of a timer 1. The timer 1 is used to indicate a validity time of the first handover command. If the terminal device meets the third handover condition before the timer 1 expires, the terminal device is handed over to a target cell that meets a condition. If the terminal device does not meet the third handover condition during running of the timer 1, after the timer 1 expires, the terminal device updates the measurement report triggering threshold based on the threshold change step configured in the measurement control message in S810.

S880. If the terminal device does not meet the third handover condition within a predetermined time, the terminal device determines a fourth measurement report triggering threshold as a first measurement report triggering threshold after the predetermined time.

For example, the threshold change step is a step value m. If the terminal device does not meet the third handover condition during running of the timer 1, after the timer 1 expires, the terminal device may determine that the first measurement report triggering threshold is the third measurement report triggering threshold plus the step value m.

As shown in FIG. 6, the third measurement report triggering threshold may be the threshold 1. If the terminal device does not meet the third handover condition during running of the timer 1, after the timer 1 expires, the terminal device may determine that the first measurement report triggering threshold is the threshold 2. The threshold 2 is the third measurement report triggering threshold plus the step value m.

S890. The terminal device sends a first measurement report to the first network device based on the first measurement report triggering threshold, and the first network device receives the first measurement report sent by the terminal device.

It should be understood that the process after S890 is similar to S130 and S140 in the handover method 100. For brevity, details are not described herein again.

According to the handover method in this embodiment of this application, a network side configures the threshold change step, to help prevent the terminal device from continuously triggering the measurement report, and reduce system overheads of the terminal device that loiters at a low speed or is stationary at a cell edge.

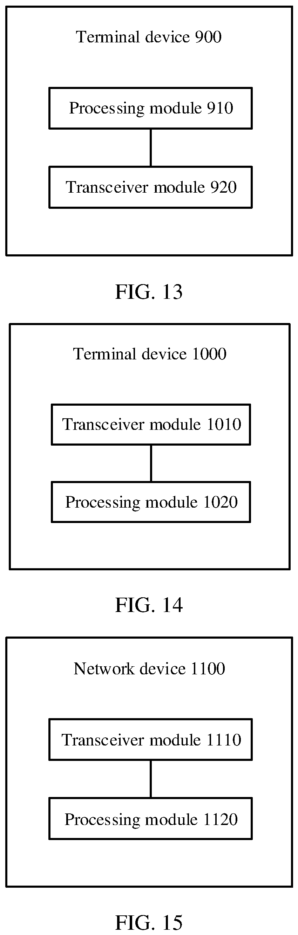

The foregoing describes in detail the handover method according to the embodiments of this application with reference to FIG. 1 to FIG. 12. The following describes in detail a terminal device and a network device according to embodiments of this application with reference to FIG. 13 to FIG. 20.

FIG. 13 is a schematic block diagram of a terminal device 900 according to an embodiment of this application. As shown in FIG. 13, the terminal device 900 includes:
a processing module 910, configured to determine a first measurement report triggering threshold based on threshold configuration information, where the threshold configuration information includes first information or threshold update information, and the first information includes at least one cell quality change rate threshold and at least two measurement report triggering thresholds; and
the processing module 910 is further configured to control a transceiver module 920 based on the first measurement report triggering threshold to send a first measurement report to the first network device; and
the transceiver module 920, further configured to receive a first handover command from the first network device, where the first handover command is used to instruct the terminal device to be handed over from the first network device to a second network device.

Optionally, the threshold configuration information includes the first information, and the transceiver module 920 is further configured to receive a measurement control message from the first network device, where the measurement control message includes the first information.

The processing module 910 is specifically configured to determine the first measurement report triggering threshold based on a cell quality change rate and the first information.

Optionally, the threshold configuration information includes the first information, and the transceiver module 920 is further configured to receive a second handover command sent by the first network device based on a second measurement report, where the second handover command includes a second handover condition and the first information.

The processing module 910 is specifically configured to:
if the terminal device does not meet the second handover condition within a predetermined time, determine the first measurement report triggering threshold based on a cell quality change rate and the first information.

Optionally, the processing module 910 is specifically configured to:
determine a first cell quality change rate threshold based on the cell quality change rate and the at least one cell quality change rate threshold; and
determine the first measurement report triggering threshold from the at least two measurement report triggering thresholds based on the first cell quality change rate threshold.

Optionally, the threshold configuration information includes the threshold update information, and the transceiver module 920 is further configured to receive a third handover command sent by the first network device based on a third measurement report, where the third handover command includes a third handover condition and the threshold update information.

The processing module 910 is specifically configured to:
if the third handover condition is not met within a predetermined time, determine the first measurement report triggering threshold based on the threshold update information.

Optionally, the threshold configuration information includes the threshold update information, and the transceiver module 920 is further configured to receive a measurement control message sent by the first network device, where the measurement control message includes a third measurement report triggering threshold and the threshold update information.

The processing module 910 controls the transceiver module 920 based on the third measurement report triggering threshold to send a third measurement report to the first network device.

The transceiver module 920 is further configured to receive a third handover command from the first network device based on the third measurement report, where the third handover command includes a third handover condition.

The processing module 910 is specifically configured to:
if the terminal device does not meet the third handover condition within a predetermined time, determine, by the terminal device, the first measurement report triggering threshold based on the threshold update information.

Optionally, the threshold update information is a fourth measurement report triggering threshold, and the processing module 910 is specifically configured to:
if the third handover condition is not met within the predetermined time,
after the predetermined time, determine the fourth measurement report triggering threshold as the first measurement report triggering threshold.

Optionally, the threshold update information is a threshold change step.

Optionally, the cell quality change rate threshold includes at least one of a quality change rate threshold of a neighboring cell, a quality change rate threshold of a serving cell, and a change rate threshold of a quality deviation between the neighboring cell and the serving cell.

Optionally, the measurement report triggering threshold includes at least one of a quality threshold of the neighboring cell, a quality threshold of the serving cell, and a threshold of a quality deviation between the neighboring cell and the serving cell.

FIG. 14 is a schematic block diagram of a terminal device 1000 according to an embodiment of this application. As shown in FIG. 14, the terminal device 1000 includes:
a transceiver module 1010, configured to receive a first measurement control message sent by a first network device, where the first measurement control message includes a first measurement report triggering threshold; and
a processing module 1020, configured to send a first measurement report to the first network device based on the first measurement report triggering threshold.

The transceiver module 1010 is further configured to receive a first handover command sent by the first network device based on the first measurement report, where the first handover command includes a first handover condition.

If the first handover condition is not met within a first predetermined time, the processing module 1020 is further configured to send a second measurement report to the first network device based on the first measurement report triggering threshold after the second predetermined time.

FIG. 15 is a schematic block diagram of a network device 1100 according to an embodiment of this application. As shown in FIG. 15, the network device 1100 includes:
a transceiver module 1110, configured to send threshold configuration information to a terminal device, where the threshold configuration information is used by the terminal device to determine a first measurement report triggering threshold, the threshold configuration information includes first information or threshold update information, and the first information includes at least one cell quality change rate threshold and at least two measurement report triggering thresholds; and
the transceiver module 1110 is further configured to receive a first measurement report sent by the terminal device based on the first measurement report triggering threshold; and
a processing module 1120, configured to control the transceiver module 1110 based on the first measurement report to send a first handover command to the terminal device, where the first handover command is used to instruct the terminal device to be handed over from the first network device to a second network device.

Optionally, the transceiver module 1110 is specifically configured to:
send a measurement control message to the terminal device, where the measurement control message includes the threshold configuration information.

Optionally, the transceiver module 1110 is further configured to send a measurement control message to the terminal device, where the measurement control message includes a second cell quality threshold.

The transceiver module 1110 is further configured to receive a second measurement report sent by the terminal device based on the second cell quality threshold.

The transceiver module 1110 is specifically configured to:
send a second handover command to the terminal device based on the second measurement report, where the second handover command includes the threshold configuration information.

Optionally, the processing module 1120 is specifically configured to:
control the transceiver module based on the second measurement report to send a handover request message to the second network device;
control the transceiver module to receive a handover request response message sent by the second network device, where the handover request response message includes the threshold configuration information; and
control the transceiver module based on the handover request response message to send the second handover command to the terminal device.

Optionally, the processing module 1120 is specifically configured to:
control the transceiver module based on the second measurement report to send a handover request message to the second network device;
control the transceiver module to receive a handover request response message sent by the second network device; and
control the transceiver module based on the handover request response message to send the second handover command to the terminal device.

Optionally, the processing module 1120 is specifically configured to:
control the transceiver module based on the second measurement report to send a handover request message to the second network device, where the handover request message includes the threshold configuration information;
control the transceiver module to receive a handover request response message sent by the second network device, where the handover request response message includes the threshold configuration information; and
control the transceiver module based on the handover request response message to send the second handover command to the terminal device.

Optionally, the threshold update information is a fourth measurement report triggering threshold or a threshold change step.

Optionally, the cell quality change rate threshold includes at least one of a quality change rate threshold of a neighboring cell, a quality change rate threshold of a serving cell, and a change rate threshold of a quality deviation between the neighboring cell and the serving cell.

Optionally, the measurement report triggering threshold includes at least one of a quality threshold of the neighboring cell, a quality threshold of the serving cell, and a threshold of a quality deviation between the neighboring cell and the serving cell.

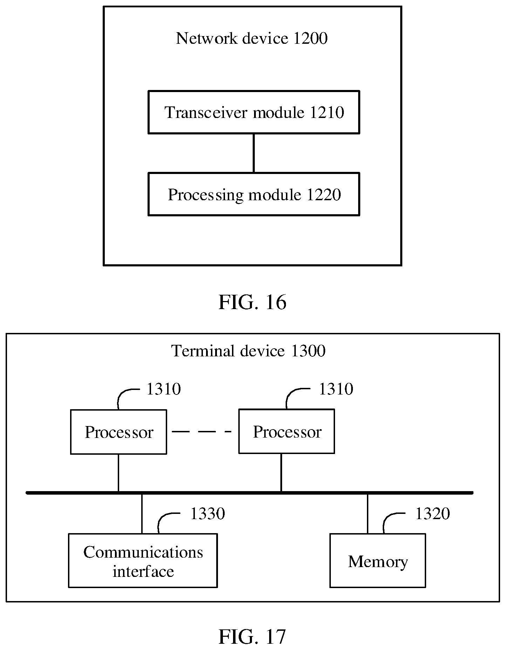

FIG. 16 is a schematic block diagram of a network device 1200 according to an embodiment of this application. As shown in FIG. 16, the network device 1200 includes:
a transceiver module 1210, configured to receive a handover request message sent by a first network device; and
a processing module 1220, configured to send a handover request response message to the terminal device based on the handover request message, where the handover request response message includes threshold configuration information, the threshold configuration information includes first information or threshold update information, and the first information includes at least one cell quality change rate threshold and at least two measurement report triggering thresholds.

Optionally, the handover request message includes the threshold configuration information.

Optionally, the threshold update information is a fourth measurement report triggering threshold or a threshold change step.

Optionally, the cell quality change rate threshold includes at least one of a quality change rate threshold of a neighboring cell, a quality change rate threshold of a serving cell, and a change rate threshold of a quality deviation between the neighboring cell and the serving cell.

Optionally, the measurement report triggering threshold includes at least one of a quality threshold of the neighboring cell, a quality threshold of the serving cell, and a threshold of a quality deviation between the neighboring cell and the serving cell.

FIG. 17 is a schematic block diagram of a terminal device 1300 according to an embodiment of this application. The terminal device 1300 includes one or more processors 1310, a memory 1320, and a communications interface 1330. The one or more processors 1310, the memory 1320, and the communications interface 1330 are all connected by using an internal path.

The memory 1320 is configured to store a computer-executable instruction.

The one or more processors 1310 are configured to execute the computer-executable instruction stored in the memory 1320, so that the terminal device 1300 can exchange, through the communications interface 1330, data with another apparatus, to perform the handover method provided in the foregoing method embodiments.

The one or more processors 1310 are configured to perform the following operations:
determining a first measurement report triggering threshold based on threshold configuration information, where the threshold configuration information includes first information or threshold update information, and the first information includes at least one cell quality change rate threshold and at least two measurement report triggering thresholds;
controlling the communications interface 1330 based on the first measurement report triggering threshold to send a first measurement report to a first network device; and
receiving, through the communications interface 1330, a first handover command sent by the first network device based on the first measurement report, where the first handover command is used to instruct the terminal device to be handed over from the first network device to a second network device.

It should be understood that, the terminal device 1300 may be specifically the terminal device 900 in the foregoing embodiment, and may be configured to perform the steps and/or procedures corresponding to the terminal device 900 in the foregoing method embodiment.

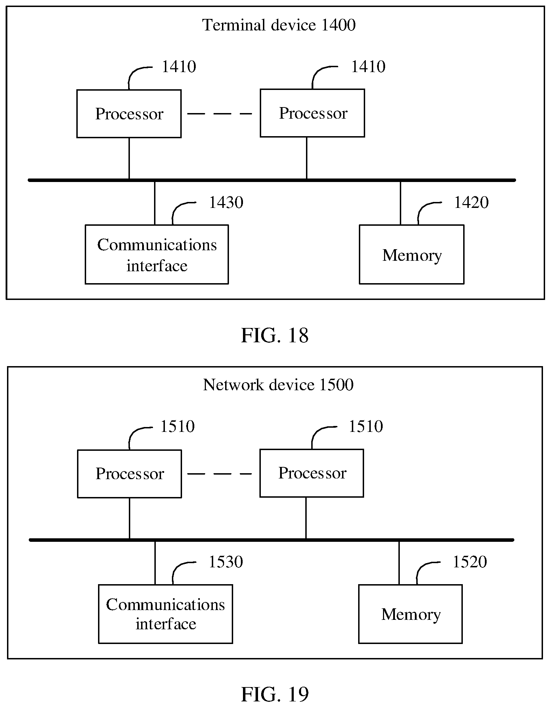

FIG. 18 is a schematic block diagram of a terminal device 1400 according to an embodiment of this application. The terminal device 1400 includes one or more processors 1410, a memory 1420, and a communications interface 1430. The one or more processors 1410, the memory 1420, and the communications interface 1430 are all connected by using an internal path.

The memory 1420 is configured to store a computer-executable instruction.

The one or more processors 1410 are configured to execute the computer-executable instruction stored in the memory 1420, so that the server 1400 can exchange, through the communications interface 1430, data with another apparatus, to perform the handover method provided in the foregoing method embodiments.

The one or more processors 1410 are configured to perform the following operations:
receiving, through the communications interface 1430, a first measurement control message sent by a first network device, where the first measurement control message includes a first measurement report triggering threshold;
sending a first measurement report to the first network device based on the first measurement report triggering threshold;
receiving, through the communications interface 1430, a first handover command sent by the first network device based on the first measurement report, where the first handover command includes a first handover condition; and
if the first handover condition is not met within a first predetermined time, sending a second measurement report to the first network device based on the first measurement report triggering threshold after a second predetermined time.

It should be understood that, the network device 1400 may be specifically the network device 1000 in the foregoing embodiment, and may be configured to perform the steps and/or procedures corresponding to the network device 1000 in the foregoing method embodiment.

FIG. 19 is a schematic block diagram of a network device 1500 according to an embodiment of this application. The terminal device 1500 includes one or more processors 1510, a memory 1520, and a communications interface 1530. The one or more processors 1510, the memory 1520, and the communications interface 1530 are all connected by using an internal path.

The memory 1520 is configured to store a computer-executable instruction.

The one or more processors 1510 are configured to execute the computer-executable instruction stored in the memory 1520, so that the terminal device 1500 can exchange, through the communications interface 1530, data with another apparatus, to perform the handover method provided in the foregoing method embodiments.

The one or more processors 1510 are configured to perform the following operations:
sending threshold configuration information to a terminal device through the communications interface 1530, where the threshold configuration information is used by the terminal device to determine a first measurement report triggering threshold, the threshold configuration information includes first information or threshold update information, and the first information includes at least one cell quality change rate threshold and at least two measurement report triggering thresholds;
receiving, through the communications interface 1530, a first measurement report sent by the terminal device based on the first measurement report triggering threshold; and
controlling the transceiver module based on the first measurement report to send a first handover command to the terminal device, where the first handover command is used to instruct the terminal device to be handed over from the first network device to a second network device.

It should be understood that, the network device 1500 may be specifically the network device 1100 in the foregoing embodiment, and may be configured to perform the steps and/or procedures corresponding to the network device 1100 in the foregoing method embodiment.

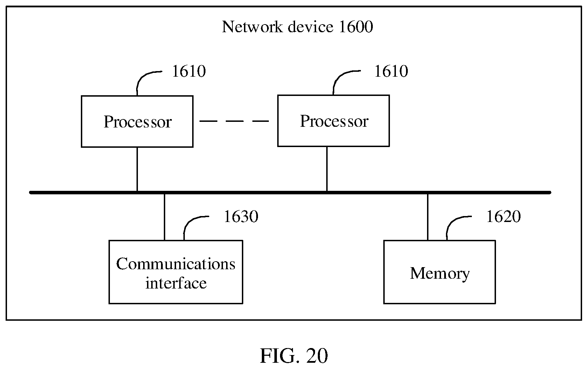

FIG. 20 is a schematic block diagram of a network device 1600 according to an embodiment of this application. The network device 1600 includes one or more processors 1610, a memory 1620, and a communications interface 1630. The one or more processors 1610, the memory 1620, and the communications interface 1630 are all connected by using an internal path.

The memory 1620 is configured to store a computer-executable instruction.

The one or more processors 1610 are configured to execute the computer-executable instruction stored in the memory 1620, so that the network device 1600 can exchange, through the communications interface 1630, data with another apparatus, to perform the handover method provided in the foregoing method embodiments.

The one or more processors 1610 are configured to perform the following operations:
receiving, through the communications interface 1630, a handover request message sent by a first network device; and
sending a handover request response message to the terminal device based on the handover request message, where the handover request response message includes threshold configuration information, the threshold configuration information includes first information or threshold update information, and the first information includes at least one cell quality change rate threshold and at least two measurement report triggering thresholds.

It should be understood that, the network device 1600 may be specifically the network device 1200 in the foregoing embodiment, and may be configured to perform the steps and/or procedures corresponding to the network device 1200 in the foregoing method embodiment.

An embodiment of this application further provides a chip system. The chip system includes one or more processors, one or more memories, and an interface circuit. The interface circuit is responsible for information exchange between the chip system and an external device, and the one or more memories, the interface circuit, and the one or more processors are interconnected by using a line. The one or more memories store instructions, and the instructions are executed by the one or more processors, so that the terminal device or the network device can perform operations, of the terminal device or the network device, corresponding to the foregoing methods.

An embodiment of this application further provides a communications system, including a terminal device and/or a network device. The terminal device is the terminal device in the foregoing aspects, and the network device is the network device in the foregoing aspects.

An embodiment of this application further provides a computer program product. The computer program product is applied to a network device, and includes a series of instructions. When the instructions are run, the terminal device or the network device can be enabled to perform operations, of the terminal device or the network device, corresponding to the foregoing methods.

In the embodiments of this application, it should be noted that the foregoing method embodiments in the embodiments of this application may be applied to a processor, or may be implemented by a processor. The processor may be an integrated circuit chip and has a signal processing capability. In an implementation process, steps in the foregoing method embodiments can be implemented by using a hardware integrated logical circuit in the processor, or by using an instruction in a form of software. The processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and completed by using a hardware decoding processor, or may be executed and completed by using a combination of hardware and software modules in a decoding processor. The software module may be located in a storage medium mature in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these memories and memories of any other proper types.

It should be understood that "one embodiment" or "an embodiment" mentioned in the entire specification means that particular features, structures, or characteristics related to the embodiment are included in one or more embodiments of this application. Therefore, "in one embodiment" or "in an embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logic of the processes, and should not be construed as any limitation to the implementation processes of the embodiments of this application.

In addition, the terms "system" and "network" in this specification may be often used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that, in the embodiments of this application, "B corresponding to A" indicates that B is associated with A, and B may be determined based on A. However, it should further be understood that determining B based on A does not mean that B is determined based on A only. B may alternatively be determined based on A and/or other information.

All or some of the foregoing embodiments may be implemented by using software, hardware, firmware, or any combination thereof. When the software is used to implement the embodiments, all or some of the embodiments may be implemented in a form of a computer program product. The computer program product may include one or more computer instructions. When the computer program instructions are loaded and executed on the computer, all or some of the procedures or functions are generated according to the embodiments of this application. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid state disk Solid State Disk (SSD)), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments, and details are not described herein again.

In the several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve an objective of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The storage medium includes any medium that may store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A handover method, comprising:
determining, by a terminal device, a first measurement report triggering threshold based on threshold configuration information, wherein the threshold configuration information comprises first information or threshold update information, and the first information comprises at least one cell quality change rate threshold and at least two measurement report triggering thresholds;
sending, by the terminal device, a first measurement report to a first network device based on the first measurement report triggering threshold; and
receiving, by the terminal device, a first handover command from the first network device, wherein the first handover command is used to instruct the terminal device to be handed over from the first network device to a second network device.

2. The method according to claim 1, wherein the threshold configuration information comprises the first information, and the method further comprises:
receiving, by the terminal device, a measurement control message from the first network device, wherein the measurement control message comprises the first information; and
the determining, by a terminal device, a first measurement report triggering threshold based on threshold configuration information comprises:
determining, by the terminal device, the first measurement report triggering threshold based on a cell quality change rate and the first information.

3. The method according to claim 1, wherein the threshold configuration information comprises the first information, and the method further comprises:
receiving, by the terminal device, a second handover command from the first network device, wherein the second handover command comprises a second handover condition and the first information; and
the determining, by a terminal device, a first measurement report triggering threshold based on threshold configuration information comprises:
if the terminal device does not meet the second handover condition within a predetermined time, determining, by the terminal device, the first measurement report triggering threshold based on a cell quality change rate and the first information.

4. The method according to claim 2 or 3, wherein the determining, by the terminal device, the first measurement report triggering threshold based on a cell quality change rate and the first information comprises:
determining, by the terminal device, a first cell quality change rate threshold based on the cell quality change rate and the at least one cell quality change rate threshold; and
determining, by the terminal device, the first measurement report triggering threshold from the at least two measurement report triggering thresholds based on the first cell quality change rate threshold.

5. The method according to claim 1, wherein the threshold configuration information comprises the threshold update information, and the method further comprises:
receiving, by the terminal device, a third handover command from the first network device, wherein the third handover command comprises a third handover condition and the threshold update information; and
the determining, by a terminal device, a first measurement report triggering threshold based on threshold configuration information comprises:
if the terminal device does not meet the third handover condition within a predetermined time, determining, by the terminal device, the first measurement report triggering threshold based on the threshold update information.

6. The method according to claim 1, wherein the threshold configuration information comprises the threshold update information, and the method further comprises:
receiving, by the terminal device, a measurement control message from the first network device, wherein the measurement control message comprises a third measurement report triggering threshold and the threshold update information;
sending, by the terminal device, a third measurement report to the first network device based on the third measurement report triggering threshold; and
receiving, by the terminal device, a third handover command from the first network device, wherein the third handover command comprises a third handover condition; and
the determining, by a terminal device, a first measurement report triggering threshold based on threshold configuration information comprises:
if the terminal device does not meet the third handover condition within a predetermined time, determining, by the terminal device, the first measurement report triggering threshold based on the threshold update information.

7. The method according to claim 5 or 6, wherein the threshold update information is a fourth measurement report triggering threshold, and the determining, by the terminal device, the first measurement report triggering threshold based on the threshold update information comprises:
if the terminal device does not meet the third handover condition within the predetermined time,
after the predetermined time, determining, by the terminal device, the fourth measurement report triggering threshold as the first measurement report triggering threshold.

8. The method according to claim 5 or 6, wherein the threshold update information is a threshold change step.

9. The method according to any one of claims 1 to 4, wherein the cell quality change rate threshold comprises at least one of a quality change rate threshold of a neighboring cell, a quality change rate threshold of a serving cell, and a change rate threshold of a quality deviation between the neighboring cell and the serving cell.

10. The method according to any one of claims 1 to 9, wherein the measurement report triggering threshold comprises at least one of a quality threshold of the neighboring cell, a quality threshold of the serving cell, and a threshold of a quality deviation between the neighboring cell and the serving cell.

11. A handover method, comprising:
receiving, by a terminal device, a first measurement control message from a first network device, wherein the first measurement control message comprises a first measurement report triggering threshold;
sending, by the terminal device, a first measurement report to the first network device based on the first measurement report triggering threshold;
receiving, by the terminal device, a first handover command from the first network device, wherein the first handover command comprises a first handover condition; and
if the terminal device does not meet the first handover condition within a first predetermined time, sending, by the terminal device, a second measurement report to the first network device based on the first measurement report triggering threshold after a second predetermined time.

12. A handover method, comprising:
sending, by a first network device, threshold configuration information to a terminal device, wherein the threshold configuration information is used by the terminal device to determine a first measurement report triggering threshold, the threshold configuration information comprises first information or threshold update information, and the first information comprises at least one cell quality change rate threshold and at least two measurement report triggering thresholds;
receiving, by the first network device, a first measurement report from the terminal device; and
sending, by the first network device, a first handover command to the terminal device based on the first measurement report, wherein the first handover command is used to instruct the terminal device to be handed over from the first network device to a second network device.

13. The method according to claim 12, wherein the sending, by a first network device, threshold configuration information to a terminal device comprises:
sending, by the first network device, a measurement control message to the terminal device, wherein the measurement control message comprises the threshold configuration information.

14. The method according to claim 12, wherein the method further comprises:
sending, by the first network device, a measurement control message to the terminal device, wherein the measurement control message comprises a second cell quality threshold; and
receiving, by the first network device, a second measurement report from the terminal device; and
the sending, by a first network device, threshold configuration information to a terminal device comprises:
sending, by the first network device, a second handover command to the terminal device based on the second measurement report, wherein the second handover command comprises the threshold configuration information.

15. The method according to claim 14, wherein the sending, by the first network device, a second handover command to the terminal device based on the second measurement report comprises:
sending, by the first network device, a handover request message to the second network device based on the second measurement report;
receiving, by the first network device, a handover request response message from the second network device, wherein the handover request response message comprises the threshold configuration information; and
sending, by the first network device, the second handover command to the terminal device based on the handover request response message.

16. The method according to claim 14, wherein the sending, by the first network device, a second handover command to the terminal device based on the second measurement report comprises:
sending, by the first network device, a handover request message to the second network device based on the second measurement report;
receiving, by the first network device, a handover request response message from the second network device; and
sending, by the first network device, the second handover command to the terminal device based on the handover request response message.

17. The method according to claim 14, wherein the sending, by the first network device, a second handover command to the terminal device based on the second measurement report comprises:
sending, by the first network device, a handover request message to the second network device based on the second measurement report, wherein the handover request message comprises the threshold configuration information;
receiving, by the first network device, a handover request response message from the second network device, wherein the handover request response message comprises the threshold configuration information; and
sending, by the first network device, the second handover command to the terminal device based on the handover request response message.

18. A terminal device, comprising:
a processing module, configured to determine a first measurement report triggering threshold based on threshold configuration information, wherein the threshold configuration information comprises first information or threshold update information, and the first information comprises at least one cell quality change rate threshold and at least two measurement report triggering thresholds; and
the processing module is further configured to control a transceiver module based on the first measurement report triggering threshold to send a first measurement report to the first network device; and
the transceiver module, further configured to receive a first handover command from the first network device, wherein the first handover command is used to instruct the terminal device to be handed over from the first network device to a second network device.

19. The terminal device according to claim 18, wherein the threshold configuration information comprises the first information, and the transceiver module is further configured to receive a measurement control message from the first network device, wherein the measurement control message comprises the first information; and
the processing module is specifically configured to determine the first measurement report triggering threshold based on a cell quality change rate and the first information.

20. The terminal device according to claim 18, wherein the threshold configuration information comprises the first information, and the transceiver module is further configured to receive a second handover command from the first network device, wherein the second handover command comprises a second handover condition and the first information; and
the processing module is specifically configured to:
if the terminal device does not meet the second handover condition within a predetermined time, determine the first measurement report triggering threshold based on a cell quality change rate and the first information.

21. The terminal device according to claim 19 or 20, wherein the processing module is specifically configured to:
determine a first cell quality change rate threshold based on the cell quality change rate and the at least one cell quality change rate threshold; and
determine the first measurement report triggering threshold from the at least two measurement report triggering thresholds based on the first cell quality change rate threshold.

22. The terminal device according to claim 18, wherein the threshold configuration information comprises the threshold update information, and the transceiver module is further configured to receive a third handover command from the first network device, wherein the third handover command comprises a third handover condition and the threshold update information; and
the processing module is specifically configured to:
if the third handover condition is not met within a predetermined time, determine the first measurement report triggering threshold based on the threshold update information.

23. The terminal device according to claim 18, wherein the threshold configuration information comprises the threshold update information, and the transceiver module is further configured to receive a measurement control message from the first network device, wherein the measurement control message comprises a third measurement report triggering threshold and the threshold update information;
the processing module controls the transceiver module based on the third measurement report triggering threshold to send a third measurement report to the first network device;
the transceiver module is further configured to receive a third handover command from the first network device, wherein the third handover command comprises a third handover condition; and
the processing module is specifically configured to:
if the terminal device does not meet the third handover condition within a predetermined time, determine the first measurement report triggering threshold based on the threshold update information.

24. The terminal device according to claim 22 or 23, wherein the threshold update information is a fourth measurement report triggering threshold, and the processing module is specifically configured to:
if the third handover condition is not met within the predetermined time,
after the predetermined time, determine the fourth measurement report triggering threshold as the first measurement report triggering threshold.

25. The terminal device according to claim 22 or 23, wherein the threshold update information is a threshold change step.

26. The terminal device according to any one of claims 18 to 21, wherein the cell quality change rate threshold comprises at least one of a quality change rate threshold of a neighboring cell, a quality change rate threshold of a serving cell, and a change rate threshold of a quality deviation between the neighboring cell and the serving cell.

27. The terminal device according to any one of claims 18 to 26, wherein the measurement report triggering threshold comprises at least one of a quality threshold of the neighboring cell, a quality threshold of the serving cell, and a threshold of a quality deviation between the neighboring cell and the serving cell.

28. A terminal device, comprising:
a transceiver module, configured to receive a first measurement control message from a first network device, wherein the first measurement control message comprises a first measurement report triggering threshold; and
a processing module, configured to send a first measurement report to the first network device based on the first measurement report triggering threshold; wherein
the transceiver module is further configured to receive a first handover command from the first network device, wherein the first handover command comprises a first handover condition; and
if the first handover condition is not met within a first predetermined time, the processing module is further configured to send a second measurement report to the first network device based on the first measurement report triggering threshold after a second predetermined time.

29. A network device, comprising:
a transceiver module, configured to send threshold configuration information to a terminal device, wherein the threshold configuration information is used by the terminal device to determine a first measurement report triggering threshold, the threshold configuration information comprises first information or threshold update information, and the first information comprises at least one cell quality change rate threshold and at least two measurement report triggering thresholds; and
the transceiver module is further configured to receive a first measurement report from the terminal device; and
a processing module, configured to control the transceiver module based on the first measurement report to send a first handover command to the terminal device, wherein the first handover command is used to instruct the terminal device to be handed over from the first network device to a second network device.

30. The network device according to claim 29, wherein the transceiver module is specifically configured to:
send a measurement control message to the terminal device, wherein the measurement control message comprises the threshold configuration information.

31. The network device according to claim 29, wherein the transceiver module is further configured to send a measurement control message to the terminal device, wherein the measurement control message comprises a second cell quality threshold;
the transceiver module is further configured to receive a second measurement report from the terminal device; and
the transceiver module is specifically configured to:
send a second handover command to the terminal device based on the second measurement report, wherein the second handover command comprises the threshold configuration information.

32. The network device according to claim 31, wherein the processing module is specifically configured to:
control the transceiver module based on the second measurement report to send a handover request message to the second network device;
control the transceiver module to receive a handover request response message from the second network device, wherein the handover request response message comprises the threshold configuration information; and
control the transceiver module based on the handover request response message to send the second handover command to the terminal device.

33. The network device according to claim 31, wherein the processing module is specifically configured to:
control the transceiver module based on the second measurement report to send a handover request message to the second network device;
control the transceiver module to receive a handover request response message from the second network device; and
control the transceiver module based on the handover request response message to send the second handover command to the terminal device.

34. The network device according to claim 31, wherein the processing module is specifically configured to:
control the transceiver module based on the second measurement report to send a handover request message to the second network device, wherein the handover request message comprises the threshold configuration information;
control the transceiver module to receive a handover request response message from the second network device, wherein the handover request response message comprises the threshold configuration information; and
control the transceiver module based on the handover request response message to send the second handover command to the terminal device.

35. An apparatus, comprising a processor, wherein the processor is coupled to a memory; and
the memory, configured to store a computer program; wherein
the processor is configured to execute the computer program stored in the memory, to enable the apparatus to perform the method according to any one of claims 1 to 11 or claims 12 to 17.

36. An apparatus, comprising a processor, a memory, and a transceiver, wherein
the memory is configured to store a computer program; and
the processor is configured to execute the computer program stored in the memory, to enable the apparatus to perform the method according to any one of claims 1 to 11 or claims 12 to 17.

37. A processor, wherein the processor comprises at least one type of circuit, configured to perform the method according to any one of claims 1 to 11 or claims 12 to 17.

38. A readable storage medium, comprising a program or an instruction, wherein when the program or the instruction is run on a computer, the method according to any one of claims 1 to 11 or claims 12 to 17 is performed.

39. A computer program, comprising a program or an instruction, wherein when the program or the instruction is run on a computer, the method according to any one of claims 1 to 11 or claims 12 to 17 is performed.

40. An apparatus, configured to perform the method according to any one of claims 1 to 11 or claims 12 to 17.
